# EUROPEAN PATENT SPECIFICATION

(11) **EP 0 945 688 B1**
(45) Date of publication and mention of the grant of the patent: **12.01.2005**
(21) Application number: 99200784.9
(22) Date of filing: 11.03.1999
(51) Int. Cl.: F24H 8/00, F24H 1/44

(54) **Heating appliance**
Kessel
Chaudière

(30) Priority: 25.03.1998 GB 9806306
(43) Date of publication of application: 29.09.1999
(73) Proprietor: Ravenheat Manufacturing Limited, Leeds, West Yorkshire LS27 9ET (GB)
(72) Inventor: Pickersgill, Louis, c/o Ravenheat Man. Ltd., Morley, Leeds, West Yorkshire LS2 8PA (GB)
(74) Representative: McDonough, Jonathan

(56) References cited:
- DE-A- 3 543 393
- DE-B- 1 055 021
- FR-A- 1 499 650
- FR-A- 2 532 041
- GB-A- 678 304

## Description

This invention relates to a heating appliance, such as might be used in a central heating system.

Heating appliances, or boilers, used in central heating systems include at least one heat exchanger, in which a fluid to be heated (such as water in most domestic heating systems) is in heat exchanging relationship with a heating fluid, such as gases which have been heated in a burner, especially a gas burner.

The invention particularly but not exclusively relates to a boiler for use in a central heating system, and particularly to a condenser boiler in which cool return water is heated through energy provided by condensing water from flue gases.

The invention also relates to a so-called combination condenser boiler which combines the principles of a condenser boiler with ability to heat incoming water to supply the hot water directly to the taps of a domestic or other building.

The invention is also applicable to boilers in which gas and air to be burned by a burner are mixed in an inlet manifold before entering a burner manifold. Such appliances are known as premix appliances. Equally, the invention applies to appliances in which gas and air are mixed in the burner manifold.

Heat exchangers commonly include elements for increasing the heat exchanging surfaces. For example, pipes through which the water to be heated flows might be fitted with fins. Indeed, a commonly used heat exchanger comprises an array of tubes for fluid which is to be heated, and an array of fins attached to the tubes.

It can be preferred for increased proficiency to include more than one heat exchanger in a heating appliance such as a condenser boiler. A secondary heat exchanger can be used to transfer heat from heating fluid discharged from a primary heat exchanger, to water to be heated which is supplied to the secondary heat exchanger.

A known condenser boiler comprises a primary heat exchanger within which is positioned a burner. Water to be heated enters the boiler via a water supply conduit and is received firstly in a secondary heat exchanger. Water in the secondary heat exchanger receives heat from exhaust gases which have been used to heat water in the primary heat exchanger, and the water then passes from the secondary exchanger through the primary heat exchanger.

Such a condenser boiler will also include a fan to control flow of gases through the appliance.

It is also known that in such appliances there is a sealed chamber, also known as depression chamber, in which there is a negative pressure, compared to atmospheric pressure created by a fan on the hot side of the primary heat exchanger. By having a depression chamber within such an appliance, gases created in the combustion chamber are kept at a relatively low pressure. This leads to a safer appliance, as fumes are less likely to leak to atmosphere.

DE-1055021 discloses a heat exchanger for gaseous media formed of solid wall plates separating the gases and having two units arranged side by side and connected to each other with a coupling.

According to the present invention there is provided a heating appliance for a central heating system as defined in the appended claims.

Spacers may be provided by which adjacent plates in the stack are held apart, to define spaces along which a heating fluid can flow, to exchange heat with the water to be heated through the walls of the plates.

The exchanger has inlet and outlet manifolds through which water entering and leaving the heat exchanger can communicate with the chambers in the plates to flow within the chambers from the inlet manifold to the outlet manifold and there is also an inlet and outlet for heating fluid.

The heating appliance may further comprise a primary heat exchanger.

Advantageously, the heating appliance further comprises a fan for controlling the flow of heating fluid around the heating appliance.

Preferably, the heating appliance comprises a depression chamber in which the pressure within the chamber is held at lower than ambient pressure.

An important feature of the secondary heat exchanger according to the present invention is that the heat exchanger comprises a baffle plate which serves to divide the edges of the plates forming the stack and thereby separate incoming from outgoing flue gases.

The inventor has found that, surprisingly, the presence of such a baffle plate improves gas flow within the heat exchanger and thus improves the efficiency of the heat appliance.

The baffle plate, by dividing the secondary heat exchanger, forces gases in a particular direction towards the plates. The chambers in the plates carry water to be heated in the heat exchanger. This creates turbulence and also a turning point in the spaces between the plates which allows high transfer of heat. The water inside the heating circuit passing through the secondary heat exchanger is also believed to be turbulent which also helps to achieve high heat transfer.

Conveniently, the fan is positioned on the depression chamber and serves to suck gases through the primary heat exchanger. An advantage of thus positioning the fan is that it is believed to in a better position to cope more safely with the day to day running of the appliance due to the fact that it does not have to suck on condensed flue gases and works on the hot side of the primary heat exchanger.

Preferably, the first and second heat exchangers are both positioned within a sealed chamber, the pressure within the sealed chamber being maintained at below atmospheric pressure when the appliance is in use.

The heating appliance of the present invention has the advantage that it can provide efficient heat exchange, while providing an acceptably low resistance to flow of both heating fluid and water to be heated. The low resistance to flow of heating fluid is believed to arise from the fact that it can flow freely in the spaces between the plates of the secondary exchanger, without interference from fins or other members extending laterally between the plates. This free flow can be important when the heat exchanger is used as a secondary heat exchanger because of the relatively high pressure in the heating fluid on the "exit" side of the fan.

A further advantage of the secondary heat exchanger in the appliance of the present invention is that it is capable of being manufactured conveniently. This is facilitated by forming the plates by extrusion e.g. of aluminium. This has been found to be a particularly convenient technique for forming a multi-channel conduit, in particular compared with previously used techniques in which fins have been formed separately on conduits.

Another advantage of the present invention is that the secondary heat exchanger and the primary heat exchanger are both contained within a sealed chamber in which the pressure of the sealed chamber is maintained at significantly lower than ambient pressure. Thus, in the unlikely event of leakage from the secondary exchanger, gases pass a second time through primary exchanger and are vented out rather than leaking into the room where the boiler is located.

The invention will now be further described by way of example only with reference to the accompanying drawings in which:
Figure 1 is a schematic representation of a heating appliance according to the present invention;
Figures 2 and 3 are schematic representations of the secondary heat exchanger forming part of the present invention;
Figures 4 and 5 are further schematic representations of the secondary heat exchanger forming part of the present invention;
Figure 6 is a cross-sectional representation of a secondary heat exchanger forming part of the present invention showing the presence of a baffle plate;
Figure 7 is a schematic representation showing the chambers formed in a plate forming part of the secondary heat exchanger shown in figure 6; and
Figure 8 is a schematic representation showing the shape of a baffle forming part of the secondary heat exchanger shown in figures 6 and 7.

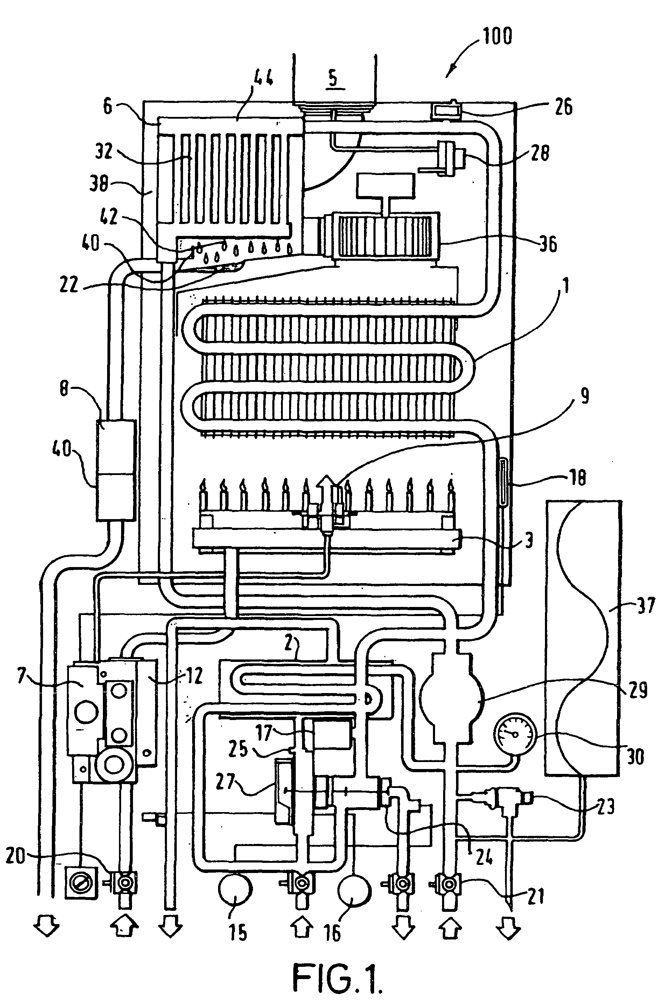

Referring mainly to figure 1, a heating appliance in the form of a boiler for use in a domestic central heating system is designated generally by the numeral 100. It comprises a primary heat exchanger 1 and, being a "combination" boiler, a heat exchanger for tap water 2. It includes a burner 3 having an ignition electrode 9 and igniter 7, and being supplied by a modulating gas valve 12. Conventional heating controls 15 and 16 are supplied together with a water pressure switch 17 and overheat cut-off thermostat 18.

Central heating water on the cool or 'return' side passes through compression ball valve 21 to a circulation pump 29 and thence to a secondary, condensing heat exchanger 6. From the secondary heat exchanger 6 water flows to the primary heat exchanger 1 where it is heated by the gas burner 3 and proceeds to a three-way valve 24. The valve 24 controls whether the water is directed to the central heating system or to the heat exchanger 2 to heat in-coming cold water for the "hot" domestic taps. A safety pressure release system 23 is connected to the inlet for return water just upstream of the pump 29. In addition a pressure gauge 30 is supplied. An expansion tank 37 is also connected between the valve 21 and the pump 29.

A fan 36 is positioned above the primary heat exchanger 1 and sucks flue gases through the primary heat exchanger 1 from the burner 3 and "pushes" them into the secondary heat exchanger 6 and out to the flue via the flue connection 5. A vent valve 26 and air pressure valve 28 are supplied to control any build up of pressure.

The secondary exchanger 6 condenses water 40 from the flue gases which collects in a condensate sump 22 which is in turn connected to a condensing trap 8 and thence to drain. Rather than allow a constant drip, which is susceptible to freezing in the winter, the condensing trap 8 fills before emptying in a single syphonic action.

The chamber 38 is sealed and, by action of the fan 36, is maintained at a pressure below ambient. This is beneficial in that leakage of flue gases is less likely when the burner chamber is maintained below ambient pressure. In addition, and in accordance with the invention, the secondary heat exchanger 6 is also within the depression chamber 38 thus any leakage from the secondary exchanger does not go to atmosphere in the building but is recirculated through the primary heat exchanger and out to the flue 5.

Other than the secondary heat exchanger 6, its positioning, and the position of the fan 36 the boiler described above is conventional its operation.

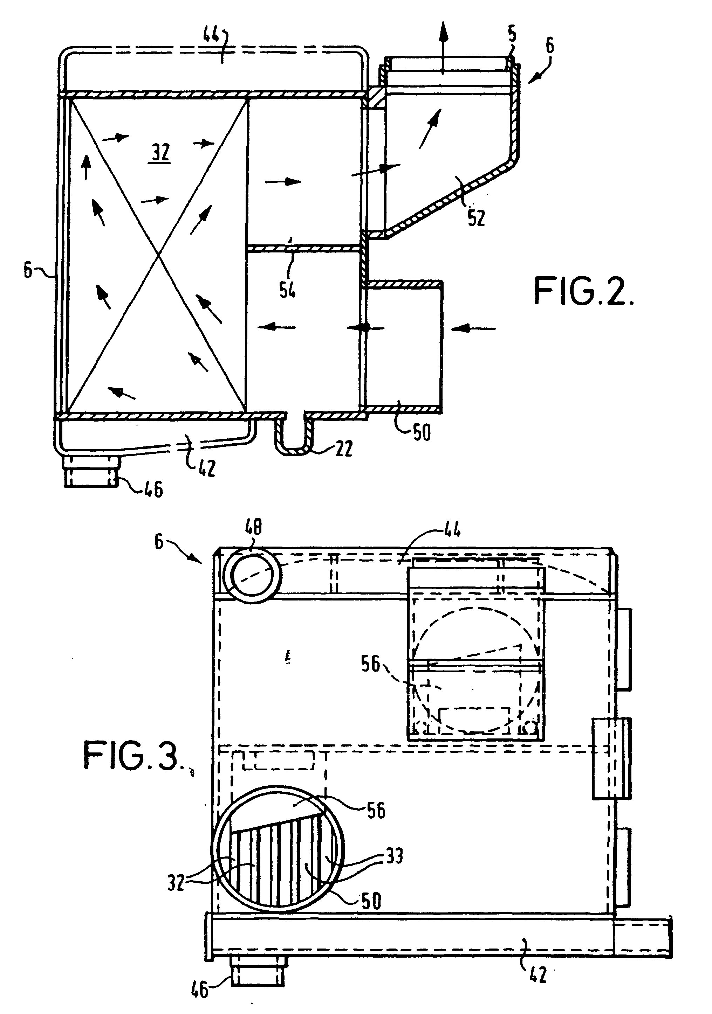

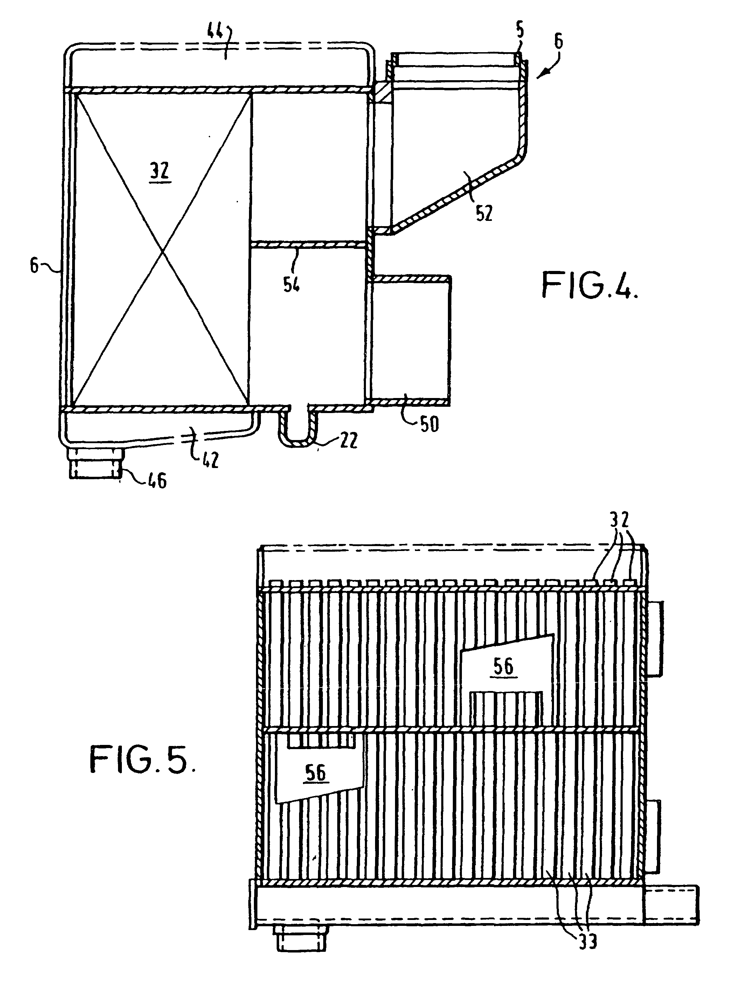

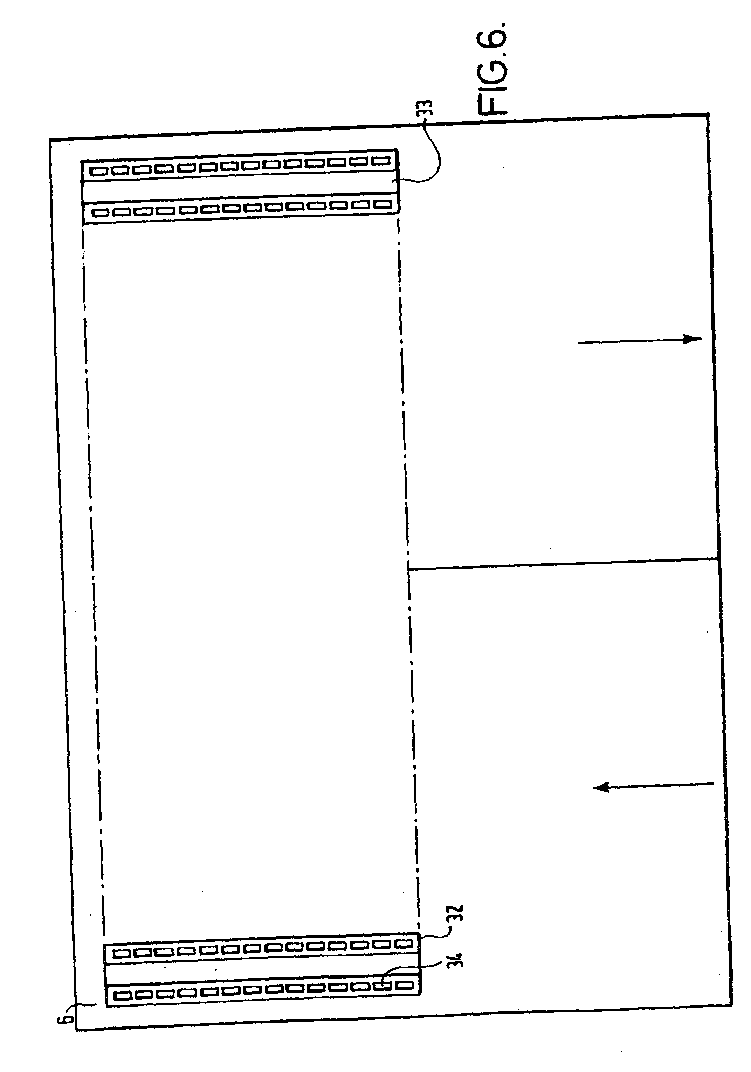

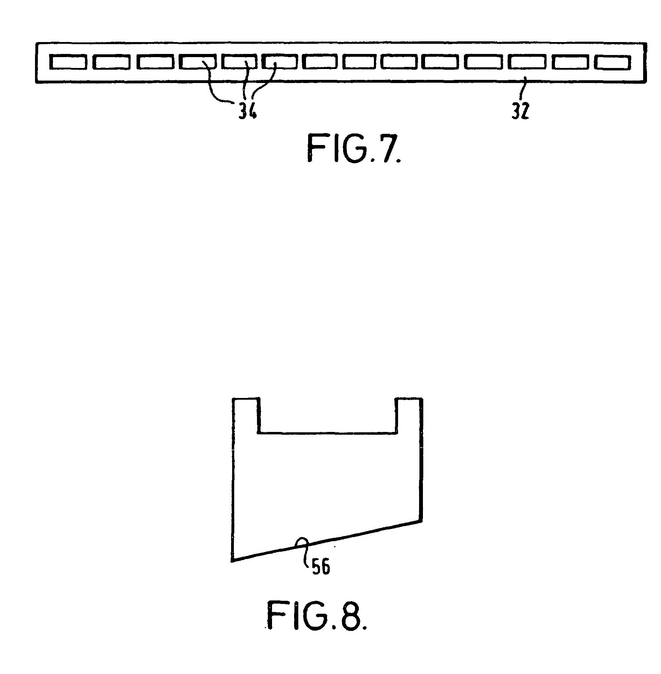

Turning now to figures 2 to 9, the secondary heat exchanger 6 will be described in greater detail. The heat exchanger 6 comprises a stack of plates 32 in spaced apart location so as to provide spaces 33 there between. As can be seen from figures 6 and 7 the plates 32 comprise a series of chambers 34 extending along their length and may be referred to as waterway tube plates. The ends of the chambers 34 open into an inlet manifold 42 and an outlet manifold 44 respectively. The inlet manifold 42 has a water inlet 46 for return water and the outlet manifold 44 has an outlet 48 for heated outlet water to go to the primary exchanger 1. Flue gas enters a flue gas inlet 50 and travels as shown by the arrows in figure 2 through the spaces 33 between the plates 32. As the gases have to move through 180° to get to a flue gas outlet 52, a certain amount of turbulence is produced which aids heat exchange. In accordance with the invention, a baffle 54 is located at right angles to the direction of the plates 32 between the inlet 50 and outlet 52 thereby forcing flue gases in the general direction shown by the arrows in figure 2.

It has also been found, in accordance with the invention, that by siting baffles 56 on the ends of the plates 32 in areas immediately opposite the inlet 50 and outlet 52 further turbulence in the gases is caused and this enhances heat exchange further.

Thus cool return water is supplied to the inlet manifold 42 of the plates 32 and passes through the plates across the secondary heat exchanger 6 to the outlet manifold 44. Flue gases from the primary exchanger 1 are forced through by means of the fan 36 the spaces 33 between the plates 32 passing heat from the flue gases to the water within the secondary exchanger 6. Temperatures of the flue gases at the fan will be in region of 160°C to 180°C. The secondary exchanger 6 of the invention cools the exhaust gases to much lower temperatures, in the region of 40°C to 50°C, transferring heat to the water and condensing water vapour 40 out of the flue gases which is collected by the condensate sump 22 and led to the condensing trap 8 and then to drain. The exact temperature is dependent upon the users adjustments and requirements. The temperatures of flue gases in traditional gas boilers are much higher and thus the boiler of the invention is considerably more efficient.

As the boiler shown in figure 1 is a combination boiler, when there is a demand for domestic hot water, e.g. when the "hot" tap is turned on, the three-way valve 24 operates to divert the hot water from the primary exchanger 1 to the heat exchanger 2. Tap water passes through the other side of the heat exchanger 2 from the cold "mains" inlet and thence to the domestic hot water tap being used, water being heated to a pre-set temperature on passing through the exchanger 2. When the tap is turned off the three way valve 24 operates to restore flow to the central heating radiator system.

The plates 32 of the secondary heat exchanger 6 are preferably formed from aluminium extrusions. Spaces are provided between the plates and they are then welded into the array shown in the drawings by means of aluminium welding.

A typical exchanger 6 is formed from nineteen plates. Each plate is about 60mm wide and about 6mm thick. Each spacer between the plates (not shown) is about 4mm thick. The thickness of the aluminium webs which makes up the plates is about 1.2mm. Thicker webs can be used in some applications, for example, with a thickness in the range 1mm to 3mm. The aluminium of the spacers and plates can be coated with material to inhibit corrosion, for example based on chromate compounds.

The appliance of the invention provides a very efficient boiler in a very compact space, allowing households to achieve savings on their space heating energy requirements of up to 35%. Although described in relation to burning North Sea gas, the invention is applicable to any fossil fuel heating appliance.

## Claims

1. A heating appliance (100) for a central heating system which includes a secondary heat exchanger (6) comprising a plurality of plates (32) arranged in a stack, the plates having chambers (34) extending along their length within the plates in which water to be heated can flow, the secondary heat exchanger (6) **characterised by** baffle plate (54) positioned substantially in the centre of the heat exchanger and orientated substantially at right angles to the plates (32) between the inlet (50) and outlet (52) for heating fluid to divide the heat exchanger (6) into two parts.

2. An alliances as claimed in claim 1 wherein spacers are provided by which adjacent plates (32) in the stack are held apart, to define spaces (33) along which a heating fluid can flow, to exchange heat with the water to be heated through the walls of the plates.

3. An appliance as claimed in any of claims 1 or 2 in which the exchanger (6) has inlet (42) and outlet (44) manifolds through which water entering and leaving the heat exchanger can communicate with the chambers (34) in the plates (32) to flow within the chambers from the inlet manifold to the outlet manifold.

4. An appliance as claimed in any of claims 1 to 3 in which the heating appliance further comprises a primary heat exchanger (1).

5. A heating appliance as claimed in claim 4 wherein the first (1) and second heat exchanger (6) are both positioned within a sealed chamber (38) the pressure within the sealed chamber being maintained at below atmospheric pressure when the appliance is in use.

6. An appliance as claimed in any of claims 1 to 5 in which the plates (32) are formed extrusion of aluminium.

7. An appliance as claimed in any of claims 1 to 6 in which additional baffles (56) are sited on the ends of the plates (32) in areas immediately opposite the inlet (50) and outlet (52) for flue gases to cause further turbulence.

## Patentansprüche

1. Wärmeerzeuger (100) für ein zentrales Heizsystem, das einen mehrere in einem Stapel angeordnete Platten (32) aufweisenden sekundären Wärmetauscher (6) aufweist, wobei die Platten entlang ihrer Länge in den Platten sich erstreckende Kammern (34), in denen zu erwärmendes Wasser fließen kann, aufweisen, wobei der sekundäre Wärmetauscher (6) **gekennzeichnet ist durch** eine Leitplatte (54), die zum Erwärmen von Fluid im Wesentlichen im Zentrum des Wärmetauschers zwischen einem Einlass (50) und einem Auslass (52) angeordnet und im Wesentlichen in rechten Winkeln zu den Platten (32) ausgerichtet ist, um den Wärmetauscher (6) in zwei Teile zu teilen.

2. Erzeuger nach Anspruch 1, wobei Abstandshalter vorgesehen sind, durch die benachbarte Platten (32) im Stapel im Abstand voneinander gehalten sind, um Räume (33) zu definieren, entlang denen ein Heizfluid fließen kann, um durch die Wände der Platten mit dem zu erwärmenden Wasser Wärme auszutauschen.

3. Erzeuger nach Anspruch 1 oder 2, wobei der Tauscher (6) einen Einlassverteiler(42) und Auslassverteiler (44) aufweist, durch das in den Wärmetauscher eintretendes und aus diesem austretendes Wasser mit den Kammern (34) in den Platten (32) kommunizieren kann, um in den Kammern vom Einlassverteiler zum Auslassverteiler zu fließen.

4. Erzeuger nach einem der Ansprüche 1 bis 3, wobei der Wärmeerzeuger außerdem einen primären Wärmetauscher (1) aufweist.

5. Wärmeerzeuger nach Anspruch 4, wobei der erste (1) und zweite (6) Wärmetauscher beide in einer abgedichteten Kammer (38) angeordnet sind, wobei der Druck in der abgedichteten Kammer unterhalb des Atmosphärendrucks gehalten wird, wenn der Erzeuger in Benutzung ist.

6. Erzeuger nach einem der Ansprüche 1 bis 5, wobei die Platten (32) durch Extrusion von Aluminium gebildet sind.

7. Erzeuger nach einem der Ansprüche 1 bis 6, wobei an den Enden der Platten (32) in Bereichen unmittelbar gegenüber dem Einlass (50) und dem Auslass (52) zusätzliche Leitplatten für Verbrennungsgas zum Bewirken weiterer Turbulenz angeordnet sind.

## Revendications

1. Dispositif de chauffage (100) destiné à un système de chauffage central, comprenant un échangeur de chaleur secondaire (6) comprenant une pluralité de plaques (32) disposées en pile, les plaques présentant des chambres (34) s'étendant sur leur longueur, à l'intérieur des plaques, dans lesquelles de l'eau à chauffer peut circuler, l'échangeur de chaleur secondaire (6) étant **caractérisé par** une plaque formant chicane (54) placée sensiblement au centre de l'échangeur de chaleur et positionnée sensiblement à angle droit par rapport aux plaques (32) entre l'entrée (50) et la sortie (52) du fluide de chauffage, afin de diviser l'échangeur de chaleur (6) en deux parties.

2. Dispositif selon la revendication 1, dans lequel des pièces d'écartement sont prévues pour maintenir séparées les plaques (32) qui sont adjacentes dans la pile, afin de définir des espaces (33) le long desquels un fluide de chauffage peut circuler, afin d'échanger la chaleur avec l'eau à chauffer, par les parois des plaques.

3. Dispositif selon l'une quelconque des revendications 1 ou 2, dans lequel l'échangeur (6) présente des collecteurs d'entrée (42) et de sortie (44) à travers lesquels l'eau entrant dans l'échangeur de l'eau et le quittant peut communiquer avec les chambres (34) des plaques (32) pour circuler à l'intérieur des chambres, du collecteur d'entrée vers le collecteur de sortie.

4. Dispositif selon l'une quelconque des revendications 1 à 3, dans lequel le dispositif de chauffage comprend, en outre, un échangeur de chaleur primaire (1).

5. Dispositif de chauffage selon la revendication 4, dans lequel le premier (1) et le deuxième (6) échangeurs de chaleur sont tous deux placés à l'intérieur d'une chambre étanche (38), la pression régnant à l'intérieur de la chambre étanche étant maintenue à un niveau inférieur à celui de la pression atmosphérique lorsque le dispositif est utilisé.

6. Dispositif selon l'une quelconque des revendications 1 à 5, dans lequel les plaques (32) sont formées par extrusion d'aluminium.

7. Dispositif selon l'une quelconque des revendications 1 à 6, dans lequel des chicanes (56) supplémentaires sont placées aux extrémités des plaques (32) dans des zones directement opposées à l'entrée (50) et à la sortie (52), pour que les gaz de combustion causent des turbulences supplémentaires.
